Europäisches Patentamt

European Patent Office

Office européen des brevets

(19)

(11) Numéro de publication : **0 291 385 B1**

(12) **FASCICULE DE BREVET EUROPEEN**

(45) Date de publication du fascicule du brevet :
**14.08.91 Bulletin 91/33**

(51) Int. Cl.⁵ : **B62D 65/00,** B62D 25/08

(21) Numéro de dépôt : **88401066.1**

(22) Date de dépôt : **02.05.88**

(54) **Structure modulaire pour véhicule et son application à l'assemblage automatique de celui-ci.**

(30) Priorité : **13.05.87 FR 8706734**

(43) Date de publication de la demande :
**17.11.88 Bulletin 88/46**

(45) Mention de la délivrance du brevet :
**14.08.91 Bulletin 91/33**

(84) Etats contractants désignés :
**DE ES GB IT SE**

(56) Documents cités :
**DE-A- 2 233 972
DE-A- 2 450 763
DE-A- 3 522 447
FR-A- 798 653
FR-A- 1 048 395
US-A- 3 044 822
US-A- 3 409 098**

(73) Titulaire : **ECIA - EQUIPEMENTS ET
COMPOSANTS POUR L'INDUSTRIE
AUTOMOBILE
F-25400 Audincourt (Doubs) (FR)**

(72) Inventeur : **Bordier José
8, rue Louis Aragon
25400 Audincourt (FR)**

(74) Mandataire : **Mestre, Jean et al
c/o CABINET LAVOIX 2, place d'Estienne
d'Orves
F-75441 Paris Cédex 09 (FR)**

Jouve, 18, rue Saint-Denis, 75001 PARIS

## Description

L'invention concerne une structure modulaire et, plus particulièrement, une telle structure pour véhicules automobiles et son application à la construction automatique de ces derniers.

Comme on le sait, la structure d'un véhicule automobile doit satisfaire à un certain nombre de critères dont les caractéristiques sont souvent contradictoires voire incompatibles. En particulier, un véhicule doit avoir une longévité relativement importante et ne pas se dégrader par corrosion, il doit assurer confort et sécurité aux passagers et, aussi, permettre des modifications esthétiques et/ou techniques afin de s'adapter aux tendances de la mode et aux goûts des clients. Tout ceci doit s'obtenir avec un montage et un assemblage au coût minimal.

On saisit donc toute l'importance qu'il peut y avoir à faire un véhicule basé essentiellement sur une structure modulaire.

En utilisant une telle structure modulaire, on facilite l'automatisation des processus d'assemblage et de montage en usine tout en pouvant satisfaire les désirs des clients. On réussit ainsi à faire converger les intérêts, à première vue opposés, du fabricant et de l'utilisateur.

Un état de la technique est, par exemple, illustré par le document DE-A-3522447. Ce document décrit une structure modulaire pour véhicule automobile faite, essentiellement d'un module antérieur à la fois porteur et support et d'un module postérieur en configuration de brancard avec deux longerons qui présentent une zone courbe équipée d'une console pour recevoir l'ancrage d'une partie aux moins des organes de suspension.

L'invention a pour objet une structure modulaire pour véhicule automobile du type indiqué dans le préambule de la revendication principale et dont les particularités sont exposées notamment dans la partie caractérisante de celle-ci.

L'invention a aussi pour objet l'application d'une telle structure modulaire pour véhicule automobile à l'automatisation de la construction de ce dernier.

D'autres caractéristiques de l'invention apparaîtront à la lecture de la description et des revendications qui suivent et à l'examen du dessin annexé, donné seulement à titre d'exemple, où :

— la Fig. 1 est une vue perspective partielle d'un mode de réalisation d'une structure modulaire pour véhicule automobile selon l'invention ; et

— la Fig. 2 est une vue de côté partiellement en coupe de la Fig. 1.

Les véhicules automobiles étant bien connus dans la technique, la description qui suit ne se rapporte qu'à ce qui a trait à l'invention. Tout le reste fait partie de la technique courante où le spécialiste pourra puiser les solutions qui satisfont au cas particulier qu'il a à résoudre.

Comme on le voit en examinant les deux figures du dessin, la structure modulaire pour véhicule automobile suivant l'invention comprend, essentiellement, un module antérieur 10, un module médian 20 et un module postérieur 30.

Le module antérieur 10 est, à la fois, et porteur pour participer à la carrosserie et recevoir des contraintes et efforts résultant notamment du roulement et/ou heurts, et aussi support pour recevoir des sous-ensembles, notamment moteurs et leurs accessoires.

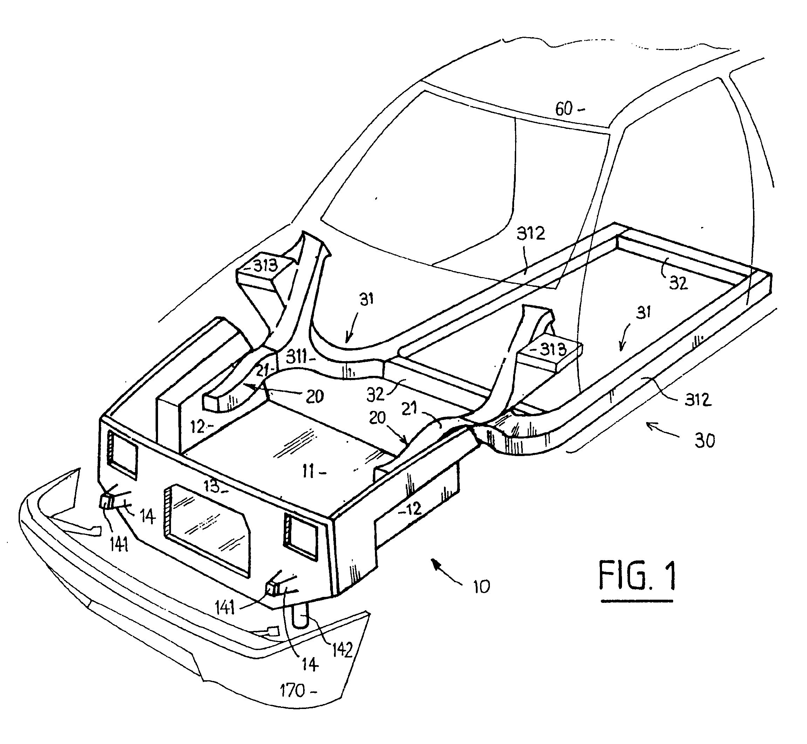

En se reportant en particulier à la Fig. 1, on voit que ce module antérieur 10 comprend, entre autres, un écran sous-moteur 11, des doublures d'ailes 12, une façade avant 13, une région d'amarrage 14 et des points de fixation aux endroits appropriés convenables comme on le comprendra par la suite.

La région d'amarrage 14 comprend notamment des absorbeurs pour petits chocs 141, se déformant pour absorber l'énergie lorsque le véhicule circule à une vitesse relative ne dépassant pas 4 km/h environ, et ce qui est nécessaire au remorquage 142.

Les points de fixation sont destinés à recevoir des sous-ensembles et leurs accessoires non illustrés. Ces sous-ensembles comprennent, par exemple, un groupe mototracteur et ces accessoires comprennent, par exemple, un groupe motoventilateur de climatisation, un radiateur, des phares et leurs optiques, une calandre, etc.. Ce module antérieur 10 peut aussi recevoir un pare-chocs 170 classique constitué d'une poutre et d'un revêtement extérieur, comme il est usuel.

On comprend donc qu'il n'est pas possible d'attribuer une localisation précise aux régions d'amarrage et aux points de fixation car ces régions et points sont tributaires des configurations particulières données à ce qu'ils doivent recevoir en propre. Ceci explique aussi la présence d'ajours et de dégagements sur la façade avant 13 dont le rôle apparaît clairement.

On voit donc que ce module antérieur 10 constitue une pièce maîtresse semi-structurelle qui joue à la fois un rôle porteur et un rôle ornemental et se comporte à la manière d'une semi-carrosserie.

Le module médian 20, absorbeur de chocs importants, comprend essentiellement deux éléments 21 qui se déforment afin de protéger l'habitacle de tout changement de géométrie dangereux pour les passagers en cas de collision sérieuse.

Comme on le sait, les normes contemporaines imposées par les pouvoirs publics aux constructeurs de véhicules automobiles sont telles, que la partie du véhicule destinée à loger le conducteur et ses passagers, l'habitacle, doit être pratiquement indéformable en cas de choc axial important à l'avant ou à l'arrière. L'énergie d'un tel heurt est absorbée par les parties du véhicule situées à l'avant ou à l'arrière de l'habitacle qui doivent se déformer sans pour autant imposer ou répercuter des modifications risquant de constituer un danger pour les personnes.

Comme on le voit, en particulier sur la Fig.1, le module postérieur 30 se présente essentiellement en configuration de brancard fait principalement de longerons 31 latéraux à profil en J horizontal. Chacun de ces longerons présente une zone courbe 311 et une partie rectiligne 312 qui sont disposées, l'une par rapport à l'autre, de manière que la zone courbe 311 soit située au-dessus de la partie rectiligne 312. Comme on l'observe, la zone courbe présente une console 313 pour recevoir l'ancrage d'une partie au moins des organes de suspension.

Les deux longerons 31 sont réunis par au moins une traverse 32 ; cette traverse est, de préférence, située du côté du module médian 20, et par exemple, dans la zone de la partie rectiligne du brancard.

La console 313 est destinée à recevoir les jambes de force et la suspension comme il est classique et d'une manière générale au moins une partie de ce qui est nécessaire à la liaison du véhicule au sol.

Une autre traverse peut être située à la partie supérieure de la zone courbe des brancards. Une telle traverse fait, s'il y a lieu, partie d'un auvent ou d'un poste de conduite 70.

Pour présenter des caractéristiques de bonne résistance à la corrosion et des propriétés mécaniques nécessaires aux fonctions que doivent assurer ces différents modules, ceux-ci, sont par exemple, faits en tôles découpées embouties mécanosoudées, en totalité ou en partie, ou de matériaux composites faits de résines synthétiques auxquelles sont incorporées des charges et/ou des fibres appropriées, telles que des fibres de verre ou de carbone. Les sections droites, les profils et la composition des matériaux utilisés pour faire ces modules sont choisis en fonction des contraintes et des peformances à obtenir.

Si nécessaire, ces matériaux se voient adjoindre des mousses ou des matériaux absorbants pour modifier ou améliorer leur comportement, notamment accoustique.

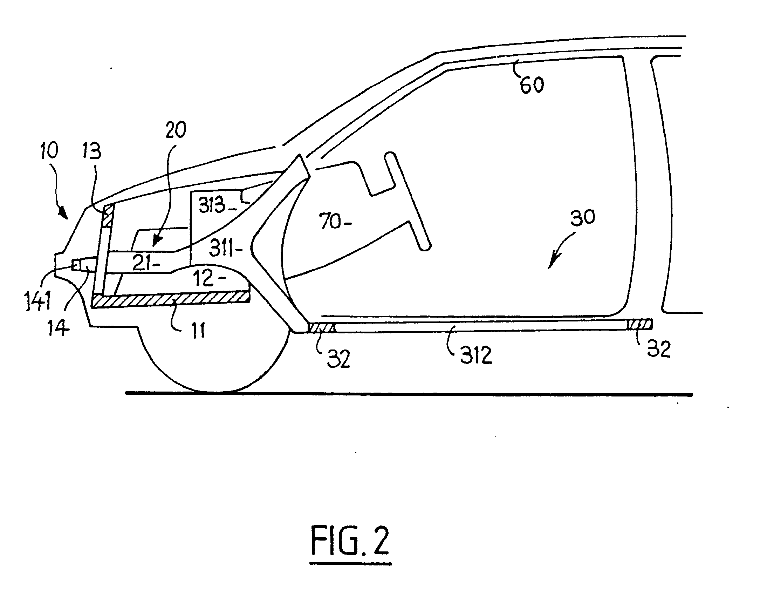

Le poste de conduite 70 illustré schématiquement sur la Fig. 2, peut être équipé, par exemple, de son pédalier, de sa colonne de direction et de tout ou partie de la planche et du tableau de bord. Ce poste de conduite peut aussi être équipé de toute les conduites d'aération et de désembuage, les prises d'air et autres éléments.

Cette structure modulaire est destinée à recevoir une caisse coque 60, par exemple en forme de cage, comme schématisé en trait fin sur les figures du dessin.

Pour l'assemblage d'un tel véhicule, on saisit immédiatement que l'on peut totalement équiper chacun de ces modules de tout ce qu'ils sont destinés à recevoir en dehors de la ligne de montage final et préalablement à l'assemblage proprement dit qui peut se faire automatiquement. On notera par exemple que le module postérieur 30 étant assemblé et équipé, on peut ensuite le munir du module médian 20 et ensuite unir celui-ci déjà joint au module postérieur, au module antérieur 10 lui-même déjà prééquipé.

On observe donc que pour une même gamme de véhicules on peut ainsi en modifier l'esthétique en changeant les pièces d'habillage de carrosserie ou bien aussi changer les organes techniques essentiels nécessaires par exemple à la propulsion du véhicule, à sa climatisation au gré des goûts spécifiques d'un client particulier ou des tendances générales de la mode.

Il est clair que, au besoin, le module avant est conçu de manière à participer à la résistance en torsion du véhicule assemblé.

En observant les dessins on voit immédiatement que le module médian comprend deux éléments qui sont chacun orienté, approximativement dans le prolongement du longeron latéral correspondant et que les zones courbes des longerons latéraux peuvent être réunies, à proximité de leur extrémité libre respective par une traverse qui fait ou non partie du module postérieur.

On saisit donc tout l'intérêt de la structure modulaire selon l'invention qui permet un assemblage final automatique après que chacun des modules a été équipé de pratiquement tout ce qu'il est destiné à recevoir en dehors de la ligne d'assemblage proprement dite.

On comprend donc qu'une telle configuration convient particulièrement bien à un montage à l'aide de robots ou d'automates programmables et que ceci autorise une adaptation aisée du véhicule aux besoins.

**Revendications**

1. Structure modulaire pour véhicule automobile constituée, entre autres, d'un module antérieur (10) à la fois porteur pour participer à la carrosserie et recevoir des contraintes et efforts résultant notamment du roulement et/ou de heurts, et support, pour recevoir des sous-ensembles notamment moteurs et leurs accessoires, et d'un module postérieur (30) en configuration de brancard fait essentiellement de deux longerons (31) latéraux avec chacun une zone courbe (311) qui présente une console (313) pour recevoir l'ancrage d'une partie au moins des organes de suspension, structure caractérisée en ce que les longerons latéraux (31) ont un profil en J horizontal où est située cette zone courbe (311) et en ce qu'elle comprend entre module antérieur (10) et module postérieur (30) un module médian (20) absorbeur de chocs importants pour protéger l'habitacle de pratiquement toute déformation dangereuse pour les passagers en cas de collision, au moins une traverse (32) réunissant les longerons latéraux (31) du côté du module médian (20).

2. Structure selon la revendication 1, caractérisée en ce que le module antérieur (10) comprend un écran sous-moteur (11), des doublures d'ailes (12), une façade avant (13) et éventuellement des régions d'amarrage (14) pour des absorbeurs de petits chocs (141), pour le remorquage (142) et pour un pare-chocs (170) le tout agencé pour contribuer à la résistance aux déformations notamment par torsion et comprend aussi des points de fixation pour le montage des sous-ensembles et de leurs accessoires.

3. Structure selon la revendication 1 ou 2, caractérisée en ce que le module médian (20) comprend deux éléments (21) qui sont, chacun, orientés approximativement dans le prolongement du longeron (31) latéral correspondant.

4. Structure selon l'une quelconque des revendications 1 à 3, caractérisée en ce que les zones courbes (311) des longerons latéraux (31) sont réunies à proximité de leurs extrémités libres respectives par une autre traverse.

5. Structure selon l'une quelconque des revendications 1 à 4, caractérisée en ce que les zones courbes (311) des longerons latéraux (31) en J sont situées au-dessus de leurs parties rectilignes (312).

6. Structure selon l'une quelconque des revendications 1 à 5, caractérisée en ce que les modules (10, 20, 30) sont faits en tout ou partie de tôles découpées embouties mécanosoudées.

7. Structure selon l'une quelconque des revendications 1 à 5, caractérisée en ce que les modules (10, 20, 30) sont faits en tout ou partie à l'aide de matériaux composites à base de résines synthétiques éventuellement renforcées par des charges et/ou des fibres.

8. Application d'une structure modulaire pour véhicule automobile conforme à l'une quelconque des revendications 1 à 7 à l'assemblage automatique à l'aide de robots ou d'automates programmables.

**Patentansprüche**

1. Modulare Struktur für ein Kraftfahrzeug, die u.a. gebildet wird durch einen vorderen Modul (10), der ein tragendes Teil zur Bildung eines Teils der Karosserie und zur Aufnahme von aus der Fahrbewegung und/oder Aufprallen resultierenden Beanspruchungen und Kräften und zugleich einen Träger zur Aufnahme von Unterbaugruppen, insbesondere Motoren und ihrem Zubehör, bildet, und durch einen gabelförmigen rückwärtigen Modul (30), der im wesentlichen durch zwei seitliche Längsträger (31) gebildet wird, von denen jeder einen gekrümmten Bereich (311) aufweist, der eine Konsole (313) zur Aufnahme wenigstens eines Teils von Aufhängungsorganen bildet, dadurch **gekennzeichnet**, daß die seitlichen Längsträger (31) ein Profil in der Form eines waagerechten "J" besitzen, wo sich der gekrümmte Bereich (311) befindet, und daß die Struktur einen zwischen dem vorderen Modul (10) und dem rückwärtigen Modul (30) angeordneten Mittelmodul (20) zur Aufnahme von starken Stößen aufweist, um den Fahrgastraum im Kollisionsfall gegen praktisch jegliche für die Passagiere gefährliche Verformung zu schützen, wobei wenigstens eine Traverse (32) die Längsträger (31) auf der Seite des Mittelmoduls (20) verbindet.

2. Struktur nach Anspruch 1, dadurch **gekennzeichnet**, daß der vordere Modul (10) einen Motorunterseiten-Schild (11), Kotflügelausfütterungen (12), ein Frontteil (13) und ggf. Befestigungsbereiche für Stoßdämpfer (141) zur Aufnahme kleiner Stöße, für den Abschlepphaken (142) und für eine Stoßstange (170) aufweist, wobei das Ganze so angeordnet ist, daß es zur Verformungssteifheit insbesondere gegenüber Verwindungen beiträgt und außerdem Befestigungspunkte für die Montage von Unterbaugruppen und ihres Zubehörs aufweist.

3. Struktur nach Anspruch 1 oder 2, dadurch **gekennzeichnet**, daß der Mittelmodul (20) zwei Elemente (21) aufweist, die jeweils annähernd in Verlängerung des zugehörigen seitlichen Längsträgers (31) orientiert sind.

4. Struktur nach einem der Ansprüche 1 bis 3, dadurch **gekennzeichnet**, daß die gekrümmten Bereiche (311) der seitlichen Längsträger (31) in der Nähe ihrer jeweiligen freien Enden durch eine weitere Traverse verbunden sind.

5. Struktur nach einem der Ansprüche 1 bis 4, dadurch **gekennzeichnet**, daß die gekrümmten Bereiche (311) der J-förmigen seitlichen Längsträger (31) sich oberhalb ihrer geradlinigen Bereiche (312) befinden.

6. Struktur nach einem der Ansprüche 1 bis 5, dadurch **gekennzeichnet**, daß die Module (10, 20, 30) ganz oder zum Teil aus gestanzten, gepreßten, mechanisch geschweißten Blechen hergestellt sind.

7. Struktur nach einem der Ansprüche 1 bis 5, dadurch **gekennzeichnet**, daß die Module (10, 20, 30) ganz oder zum Teil mit Hilfe von Verbundmaterialien auf der Basis von ggf. durch. Einlagen und/oder Fasern verstärkten Kunststoffen hergestellt sind.

8. Verwendung einer modularen Struktur für Kraftfahrzeuge nach einem der Ansprüche 1 bis 7 in der automatischen Montage mit Hilfe von Robotern oder programmierbaren Automaten.

**Claims**

1. A modular structure for a motor vehicle, comprising inter alia a front module (10) which acts both as a bearing structure for participating in the bodywork and receiving stresses and forces resulting more particularly from the rolling of the vehicle and/or impacts, and as a supporting structure for receiving subassemblies, more particularly engines and their accessories, and a rear module (30) of yoke configuration mainly comprising two longitudinally extending side members (31) each having a curved zone (311) having a bracket (313) for receiving the anchoring of at least a portion of the suspension elements, said structure being characterized in that the longitudinally extending side members (31) have a horizontal J-shape in which said curved zone (311) is situated, the structure also comprising between the front module (10) and the rear module (30) a median module (20) which absorbs large shocks to protect the compartment against practically any deformation which is dangerous to the passengers in the event of a collision, at least one cross-member (32) interconnecting said longitudinally extending side members (31) adjacent the median module (20).

2. A structure according to claim 1, characterized in that the front module (10) comprises a sub-engine screen (11), wing linings (12), a front wall (13) and possibly fastening regions (14) for shock absorbers (141) absorbing small shocks, the towing element (142) and a bumper (170), the whole being so arranged as to contribute towards the resistance to deformations, more particularly by torsion, and comprising fixing points for the mounting of subassemblies and their accessories.

3. A structure according to claims 1 or 2, characterized in that the median module (20) comprises two elements (21) which are each oriented substantially in the prolongation of the corresponding longitudinally extending side member (31).

4. A structure according to any of claims 1 to 3, characterized in that the curved zones (311) of the longitudinally extending side members (31) are interconnected adjacent their respective free ends via another cross-member.

5. A structure according to any of claims 1 to 4, characterized in that the curved zones (311) of the J-shaped longitudinally extending side members (31) are located above the rectilinear portions (312) thereof.

6. A structure according to any of claims 1 to 5, characterized in that the modules (10, 20, 30) are completely or partly made from blanked and press-formed metal sheets welded together.

7. A structure according to any of claims 1 to 5, characterized in that the modules (10, 20, 30) are completely or partly made from composite materials based on synthetic resins, possibly reinforced with fillers and/or fibres.

8. Application of a modular structure for a motor vehicle according to any of claims 1 to 7 in the automatic assembly of the vehicle by means of robots or programmable automata.

FIG. 1

EP 0 291 385 B1

## FIG. 2